# EUROPEAN PATENT SPECIFICATION

(11) **EP 2 966 365 B1**
(45) Date of publication and mention of the grant of the patent: **25.04.2018**
(21) Application number: 15178605.0
(22) Date of filing: 10.07.2008
(51) Int. Cl.: F24D 11/00, F24D 19/10, F24D 12/02

(54) **CONTROL OF HOT WATER**
REGELUNG VON HEISSEM WASSER
COMMANDE D'EAU CHAUDE

(30) Priority: 11.07.2007 GB 0713476
(43) Date of publication of application: 13.01.2016
(62) Divisional of application: 08775906.4
(73) Proprietor: EC Power A/S, 8382 Hinnerup (DK)
(72) Inventor: ANDERSEN, Jens-Otto, Ravn, 8000 Århus C (DK); LOSE, Steven, 4293 Dianalund (DK)
(74) Representative: Taylor, Adam David

(56) References cited:
- FR-A3- 2 444 900
- GB-A- 1 107 086

## Description

The present invention relates to a hot water system comprising a heating device water circuit, a main water circuit and an apparatus for controlling their connection; and a method of controlling a valve for controlling flow of water from a heating device water circuit output to a main water

A hot water system according to the preamble of claim 1 is known from document GB 1 107 086.

Heating devices in the form of combined heat and power (CHP) plants/units are known for connection to installations such as domestic homes or industrial buildings in which power and heat are generated. The CHP unit may, for example, be an internal combustion (IC) engine or a fuel cell. The power produced by the CHP unit could be in the form of mechanical power but is generally in the form of electrical power. The production of power produces 'waste' heat, usually via a cooling water circuit. A typical CHP unit is provided with a heat store in which the heat produced during generation of power is stored when it is not being consumed by the installation. The heat store is generally a tank or vessel which receives surplus hot water from the CHP power unit.

To provide heat to the installation the CHP system's water circuit is connected to the water system or circuit of the home i.e. the radiators. A CHP based system retrofitted to an existing hot water system will be intended to work in conjunction with the existing heating device, which may be a boiler powered by gas or electricity. New CHP installations can also be provided with such a secondary heat generating device, which can be used in isolation or in combination with the CHP unit and heat storage device. The aim of such systems is to improve efficiency by allowing some or all of the heat and electricity demands of the installation to be met by the CHP unit.

However, problems arise when the heat demand over a long period is higher than the possible heat production from the CHP system. In this situation the electricity demand may still require that power is produced by the CHP unit, generally at a lower output than maximum power output, and that the CHP unit is in undisrupted operation, in order to give the most energy and cost efficient overall operation of the energy system. To meet the heat demand it is necessary for the boiler to be operated to augment the CHP heat output. However, it often occurs that the combined heat production of the boiler and the CHP unit is in excess of the heat demand. As a result, the boiler needs to be turned off when the temperature in the system approaches the required temperature as set by the user. Then as the temperature begins to fall and passes below the user's desired temperature the boiler switches back on again. As the temperature then rises the boiler switches off. Thus, the boiler is continuously switched on and off as the temperature fluctuates about the user's desired temperature. This switching can be damaging to the boiler, and operating the boiler for only brief periods is not efficient.

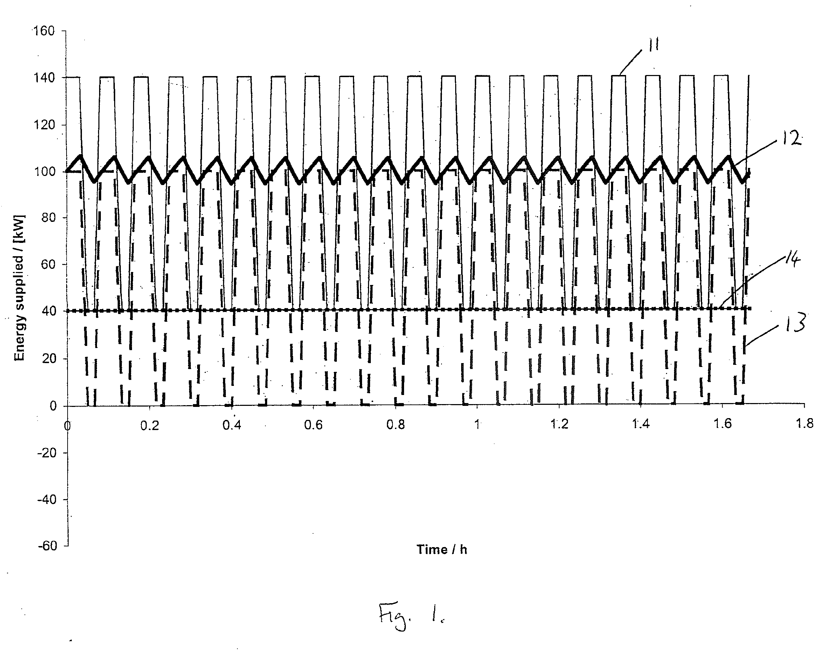

Figure 1 illustrates this problem in a typical prior art system. The desired average heat production in this case is 100 kW. The CHP unit is required to produce electricity at a constant level and in this example this results in a heat production of 40 kW, shown by the horizontal line 14. This heat production is not sufficient to meet heat demand, and therefore the boiler is operated, producing heat as shown by the dashed line 13. With this operation the CHP unit acts as a pre-heater for the boiler, and the combined heat output of CHP unit and boiler is shown by the solid line 11. At the start of the graph, the boiler is being operated, and as a result the combined power output 11 is above the required average of 100 kW. Thus, the average heat energy supplied rises, as shown by the bold line 12, and the temperature of the installation rises as well. At some point the installation temperature will become too high, and the boiler will therefore turn off. The average heat energy supplied 12 then falls, as does the temperature, until it hits the temperature at which the boiler turns back on. This cycle then continues, with the boiler turning on and off rapidly over time.

In addition, the system set out above will have a significant negative effect when used with a condensing boiler. This is because the pre-heating effect mentioned above will prevent condensation in a condensing boiler. The result is that the boiler will use more fuel to produce the same amount of heat, reducing the efficiency considerably. This is of particular importance where legislation requires that condensing boilers should be used, such as in the UK

GB 1,107,086 discloses a hot water heating installation wherein a plurality of individual heating units are fed from a single common supply such as a boiler.

A further problem with existing systems that use a heating device such as a CHP unit arises from the fact that such a system often uses a layout in which the CHP water circuit has an output and a return connected to a main water circuit. This also applies in the common situation where a secondary heating device such as a boiler is connected to the main circuit upstream of primary heating device circuit. In these systems it is necessary to ensure that the flow entering the main water circuit from the heating device circuit output does not reverse. A solution to this problem would be to use a one-way valve placed on the main water circuit between the CHP circuit output and return. However, the main water circuit uses a large diameter pipe, such as a 3 inch (7.5 cm) or 4 inch (10 cm) pipe, and as a consequence the use of a one-way valve is difficult and expensive. In addition, the control of such systems requires the mixing temperature of the heated water from the primary heating device water circuit and the water in the main circuit to be controlled. This mixed water forms the input water to the secondary heating unit or the input water to an installation on the main circuit.

Viewed from a first aspect the present invention provides a hot water system comprising: a heating device water circuit connected via an input and an output to a main water circuit; a first temperature sensor; a second temperature sensor; and an apparatus for controlling connection of the heating device water circuit to the main water circuit, the connection including a valve for controlling flow of water from the heating device water circuit output to the main water circuit, the apparatus comprising:a control system for controlling operation of the valve, wherein the control system has two sensor inputs for measurements of temperature from the first and second temperature sensors, wherein: the first temperature sensor is for measuring a return temperature and is installed at a location upstream of the heating device water circuit output and in a flow path extending between this output and a heating device, for heating water, in the heating device water circuit; and the second temperature sensor is for measuring a forward temperature of the main water circuit and is installed on the main water circuit downstream of the heating device water circuit output.

When in use the valve apparatus can detect increases in the return temperature either directly using a sensor on the main circuit return pipe, or indirectly using a sensor placed on return pipe of the heating device water circuit. Such increases indicate that either the flow of the heated output of the heating device water circuit has reversed, or that the returning water in the main water circuit is too hot, and can be used to trigger closing of the valve. Flow reversal may occur when an installation on the main water circuit is using less heated water than the heating device water circuit is producing. Excessively hot returning water in the main circuit can occur when too much heat is being supplied compared to the demand in the main water circuit. In either case it is advantageous to reduce or stop the amount of hot water outputted from the heating device water circuit to the main circuit.

The flow path extending from the heating device water circuit output toward the heating device essentially extends back along the main water circuit and into the heating device water circuit return, then toward the heating device. For example, the first temperature sensor input may be for measuring a temperature at a location adjacent the connection of the heating device water circuit return and the main water circuit or at a point along the heating device water circuit return. However, preferably, for best results using the preferred features of this aspect, the first temperature sensor input is for measuring a temperature at a location on this flow path which is on the main water circuit between the connections to the heating device water circuit output and heating device water circuit return, i.e. the input to this circuit from the main circuit. This means that any flow reversal reaches the sensor quickly, and also means that the physical locations of the actual sensors used are relatively close to each other, making installation easier. Most preferably the first temperature sensor input is for measuring a temperature at a location between connections to the heating device water circuit input and heating device water circuit return to the exclusion of locations immediately adjacent the connections.

The heating device may advantageously be a CHP unit such as an IC engine or a fuel cell, but the valve apparatus would also be useful for controlling the output of other types of heating device. The valve apparatus is preferably used with a primary heating device on the heating device water circuit, and a secondary heating device on the main circuit. It is particularly useful when used in this way, as it can control the interaction between the primary and secondary heating devices, either in allowing them to be used sequentially as discussed above, or allowing them to be used together without overheating the water.

Preferably, the control system is arranged to determine an operational set point based on the temperature of water that can be supplied by the heating device water circuit. The valve may then be controlled to maintain the water in the main water circuit downstream of the heating device water circuit output at the operational set point. This arrangement ensures effective operation of the system at times when the user set point cannot be reached, by replacing the user set point with the operational set point, which may be a lower temperature. In a preferred embodiment, if the highest temperature of water that can be supplied by the heating device water circuit is higher than the user set point of the installation, the user set point is used as the operational set point, else the highest possible set point is used as the operational set point. To determine the water temperature that can be supplied by the heating device circuit, the apparatus may include a temperature sensor on the heating device water circuit and/or a temperature sensor in a heat storage tank on this circuit.

The control system preferably adjusts the valve to maintain the forward temperature reading at the second temperature sensor input at a set point, advantageously the operational set point discussed above. In this type of system, the valve can be opened or closed to various degrees to obtain a corresponding variation in flow rate. The forward temperature is measured at a set interval, corresponding to a regulation cycle time, and the valve is adjusted to control the forward temperature based on the measured temperatures. The control system may be arranged to open or close the valve based on how far the forward temperature reading differs from the set point.

Preferably the control system utilises a temperature range either side of the set point where no valve adjustment is made. This "neutral band" helps avoid oscillation of the valve and excessively frequent adjustments.

The control system may utilise a temperature range either side of the set point where the valve is adjusted in proportion to the difference from the set point. This type of proportional adjustment provides accurate control of temperature using the valve movement. Preferably, outside of this "proportional band" the valve is opened or closed continually until a temperature within the proportional band is achieved.

In a preferred embodiment, the control system utilises a neutral band with a temperature range calculated as the amount by which the temperature is expected to rise or fall from the set point if the valve is opened or closed with a set minimum movement time. In another preferred embodiment, most preferably in combination with the above neutral band, the control system utilises a proportional band with an outer limit calculated as the amount by which the temperature is expected to rise or fall from the set point if the valve is opened or closed with a set maximum movement time. The maximum movement time preferably corresponds to a regulation cycle time used by the control system. For example, this may be 5 seconds, with the total open to close movement of a valve typically taking 60 seconds. In this case, when the forward temperature is in the proportional band (and when outside the neutral band, if present) the valve movement for that regulating cycle is a proportion of the maximum corresponding to the ratio of the difference in measured temperature from the set point to the size of the proportional band. For example, with a proportional band of ±5°C and a temperature that is 2°C above from the set point, the valve will close by 2/5 of the maximum valve movement.

By making the neutral and proportional band ranges dependent on the minimum and maximum valve adjustment, the control system adjusts the valve in the optimal fashion for the valve adjustment times.

The calculation of the temperature range for the neutral band and/or proportional band is preferably based on an assumption of a flow rate through the main circuit compared to the maximum possible flow rate through the heating device water circuit output. In a typical system, the flow through the main circuit is assumed to be a half of the maximum possible flow through the output. The assumed flow rate enables the control system to estimate the expected change in temperature for any given adjustment of the valve, based on the measured heating device and main circuit temperatures. The assumed flow rate may be used in calculation of the operational set point.

The control system may be arranged to change the assumed flow rate, in order to ensure that the calculated temperature bands are appropriate. This may be achieved using one or more of the following rules:
Rule 1: If there is a rapid increase in the return temperature, then a flow reversal prevention system is triggered.
Rule 2: If the forward temperature crosses over the neutral band in a set time, then the assumed flow rate is reduced.
Rule 3: If the forward temperature measured by the second sensor is falling rapidly, then the assumed flow rate is increased.
Rule 4: If the forward temperature remains outside the neutral band for a set time, for example 3 minutes, then the assumed relative flow is adjusted to a higher value.
Rule 5: If the forward temperature remains in the outer half of the neutral band for a set time, for example 5 minutes, then the assumed relative flow is increased.

The flow reversal prevention system preferably comprises a series of actions carried out by the control system to reduce the flow rate out of the heating device water circuit output, along with a decrease in the assumed flow rate of the main circuit. In a preferred embodiment, upon detection of a rapid increase in temperature on the return temperature sensor, the control system closes the valve continually for a set time, and then continues to close the valve at a lesser rate until the temperature increase has stopped and/or is reversed, i.e. the return temperature at the first temperature sensor has returned to its value prior to the increase, or close to that value.

Preferably, all variables used in the valve regulating system are 'locked' upon detection of the rapid rise in return temperature, i.e. they are fixed at the values they had prior to detection of this rise. These variables may include the operational set point, the neutral band and the proportional band. Locking the variables ensures that they are not adversely affected by temperature readings resulting from the reverse flow. The assumed flow rate is preferably reduced so that later operation takes account of the falling flow rate that triggered the flow reversal. After the reverse flow situation is cleared then the locked variables may be released so that they can be altered by the regulation mechanism again. Preferably the locked variables are only released after normal operation has continued for a set period, for example for 1 minute. This ensures that unusual temperature readings resulting from the reverse flow do not affect later operation of the control system.

The use of a valve controlled by a controller with inputs for temperature sensors on the heating device water circuit and on the main circuit upstream of the heating device water circuit thus allows the reversal of flow to be prevented, and allows the mixing temperature to be controlled. It also allows overheating of the system to be avoided.

In addition, a secondary heating device may be present on the main water circuit downstream of the heating device water circuit output. Generally, such devices will turn on and off based on the water input temperature. Thus, the valve of this aspect of the invention can be used to activate and deactivate a secondary water heating device by controlling the heat of the mixed water.

Preferred embodiments include the first and/or second temperature sensors as a part of the apparatus, the sensor(s) being operably connected to the corresponding temperature sensor input(s) of the controller. The temperature sensors are for installation at the locations described above and are, in use, installed at the locations, for example by mounting on an interior or exterior of a pipe or other water conduit. The apparatus may also include the valve.

Viewed from a second aspect the present invention provides a method of controlling a valve for controlling flow of water from a heating device water circuit output to a main water circuit, the method comprising: measuring a return temperature at a location upstream of the heating device water circuit output and in a flow path extending between this output and a heating device (1), for heating water, in the heating device water circuit; measuring a forward temperature of the main water circuit at a location downstream of the heating device water circuit output; and adjusting the valve when the measured temperatures meet certain conditions.

The step of measuring a return temperature may use a first temperature sensor, and the location of the first temperature sensor may be as discussed above in relation to the first aspect.

Preferably, the method includes determining parameters and controlling the valve with steps as set out above in connection with the control system.

In a third example apparatus that can be combined with the apparatus of the first aspect, there is provided a water heating apparatus for supply of heated water to an installation, the apparatus comprising: a combined heat and power (CHP) unit, a heat storage means, and a secondary heating device; wherein the CHP unit and the secondary heating device are arranged to operate in a first mode where the CHP unit provides heat to the heat storage means and the secondary heating device provides all the heated water required to meet the heat demand of the installation; and to operate in a second mode where the secondary heating device is inactive, and the heated water to meet the heat demand is provided by the CHP unit and/or from the heat storage means.

Thus, with these two modes heated water can be provided by the CHP unit and/or the heat storage or by the secondary heating device, which operates independently of the CHP circuit, such that it is only ever used to meet the entire demand, and not to 'top-up' heat production by using it in combination with heat from storage. Heated water is effectively generated in 'batches' allowing the CHP unit to operate with undisrupted power production and the secondary heating device to operate for long periods of time without frequent switching on and off. Typically, in the second mode, heat would simply be provided from storage with the CHP unit being inactive. However, under some circumstances operation of the CHP unit will be desirable either to increase the total heat output of the system in the second mode, or because it is required to run the CHP unit to meet an electrical power demand. Should the heat storage be empty, then the CHP might possibly be run alone to continue to supply heat to meet demand, especially if there is also a local power demand. In most cases however the system will preferably switch to the first mode when the heat storage becomes empty, as discussed below.

The secondary heating device may be a boiler, and may for example be a condensing boiler. As the system uses batched operation of the boiler and CHP unit the negative effects resulting from supplying pre-heated water to a condensing boiler are avoided.

In a typical situation, the secondary heating device will have a stand-alone control system, for example in the form of a thermostat, that turns the secondary heating device on when the temperature of the water entering or leaving the secondary heating device is below a first preset temperature and turns the secondary heating device off when the water temperature exceeds a second preset temperature. Preferably, this feature is utilised so that operation of the secondary heating device is controlled by controlling the temperature of the water fed to the secondary heating device. Thus, the apparatus may be arranged to switch to the second mode by using the CHP unit and/or heat storage to supply water to the secondary heating device at a temperature above the second preset temperature. The apparatus may switch from the second mode to the first mode by stopping supplying hot water from the CHP unit and/or heat storage to the secondary heating device.

This means that the CHP control system can be used to indirectly control operation of the secondary heating device, even though the actual control system for the secondary heating device is completely separate. This is particularly useful when a CHP unit is retrofitted to an existing system, as no modification of the existing control system is required. In a preferred embodiment, the apparatus is arranged such that in the first mode the CHP unit provides heated water to fill the heat storage to a set maximum level, and when the maximum level is reached, the apparatus switches to the second mode. As the CHP unit will take some time to fill the heat storage, the secondary heating device should be run for a long period of time.

The maximum level should be selected so that when it is reached the CHP unit and/or heat storage can meet the heat demand, and is preferably selected so that heat demand can be met for at least a certain amount of time. The maximum level of heat storage may be when the heat storage is full, i.e. when there would otherwise be no more cooling available to the CHP unit. This provides the greatest possible time in the second mode. Alternatively, the maximum level of heat storage may be when the available cooling capacity in the heat storage means drops to a level at which the CHP unit can only be run for a certain minimum period of time without running out of cooling. This makes sure that there is no risk of damage to the CHP unit.

Preferably the apparatus is arranged such that it operates in the second mode until the amount of stored heat is below a minimum level, at which point operation is switched to the first mode. Thus, the sequencing of CHP and secondary heater operation may be initiated by the heat storage running cold. The minimum level of stored heat may be the point when the heat storage means and CHP unit cannot meet the heat demand, or preferably it may be a minimum level of heat determined based upon the expected heat usage during start up of the secondary heating device. This ensures that heat demand can always be met.

It should be noted that although the invention concerns the above first and second modes, other modes of operation could also be available depending on the power and heat demand. For example there may be an inactive mode, where no heat is required, and power demand is such that it is not effective to run the CHP unit. In such a mode both the CHP unit and secondary heating device can be inactive.

In a fourth example method that can be combined with the method of the second aspect, there is provided a method of supplying heated water to an installation using an apparatus including a combined heat and power (CHP) unit, a heat storage means, and a secondary heating device; the method comprising: under a first set of conditions, operating the apparatus in a first mode where the secondary heating device provides all the heated water required to meet the heat demand of the installation and the CHP unit provides heated water to the heat storage means; and under a second set of conditions operating the apparatus in a second mode where the secondary heating device is inactive, and the heated water to meet the heat demand is provided by the CHP unit and/or from the heat storage means.

Preferably, the first set of conditions includes a condition that the first mode is used when the amount of heat stored goes below a set minimum level. There may be a further condition in the first set of conditions that the first mode then continues to be used until the amount of heat stored goes above a set maximum level. The maximum and minimum levels can be selected as discussed above.

Alternatively and/or additionally to the conditions mentioned above the first set of conditions may include a condition that the first mode is used where the combination of heat supplied by the heat storage and the CHP unit would be insufficient to meet heat demand. Thus, the CHP unit and heat storage is used to the fullest extent possible, but is then replaced by the boiler to allow the heat storage to be refilled by the CHP unit. This means that the method operates the system in an efficient manner.

The second set of conditions may provide that the apparatus starts to operate in the second mode when the heat storage has filled up to a maximum level, the maximum level being as discussed above.

In a preferred embodiment the conditions are selected such that the apparatus is operated in the second mode until the amount of stored heat is below a minimum level, at which point operation is switched to the first mode. The CHP unit may then be used to provide heated water to fill the heat storage to the maximum level, whereupon operation may switch to the second mode.

There may be a further set of conditions under which an inactive mode is used. In particular, under a condition where no heat is required by the installation the method may include operating the apparatus in the inactive mode, wherein neither the CHP unit nor the secondary heating device produce heat. The further set of conditions may also require that the heat storage contains the minimum level of heat.

In a fifth example apparatus that can be combined with the apparatus of the first aspect, there is provided an apparatus for connecting a heating device water circuit to a main water circuit, the apparatus comprising: a valve for controlling flow of water from the heating device water circuit output to the main water circuit, and a controller that controls operation of the valve, wherein the controller has two sensor inputs, the sensor inputs comprising a first temperature sensor input to measure a temperature in the heating device water circuit and a second temperature sensor input to measure the temperature of the main water circuit downstream of the heating device water circuit output.

This apparatus can be used with a heating device as discussed above in relation to the first aspect, and provides similar advantages.

The temperature input for the heating device water circuit may be arranged for connection to a temperature sensor on the heating device water circuit return. Alternatively, an existing temperature sensor present on the heating device water circuit may be used. This could be a sensor in a water storage device on the heating device water circuit. Using an existing temperature sensor reduces the amount of work involved in the installation of the system.

Preferably the controller is arranged to at least partially close the valve when the second temperature sensor input exceeds a certain level. The certain level may be an absolute limit, for example a maximum above which the temperature in the system is at a dangerous level for the system components or for users of the system. Alternatively, it may be a limit set based on the maximum temperature required for effective operation of the installation.

In a preferred embodiment the controller is arranged to operate with a variable mixing set point for the second sensor, the set point being initially set at a maximum desired mixed temperature and being reduced by a certain amount dependant on by how much the return temperature sensed by the first sensor exceeds a preset level, and the valve being closed when the return temperature reaches the set point. For example, the initial set point may be 80°C, and the set point may be reduced by 2°C for each 1°C that the return temperature exceeds 65°C. Thus, if the return temperature is 66°C then the mixing set point is reduced to 78°C. When the return temperature rises to 69°C then the mixing set point is reduced to 72°C. The valve is closed at a return temperature of 70°C, as the mixing set point is then also 70°C.

An example of a controller capable of carrying out this type of operation is sold under the name Danfoss ECL.

The valve may be partially closed depending on how near the return temperature is to the mixing set point. This provides a smoother control.

The controller may be arranged to at least partially close the valve when the mixed temperature exceeds a maximum level. For example this could be when the mixed temperature exceeds the initial set point of 80°C or preferably when the mixed temperature exceeds the level of the variable set point. This prevents the main circuit temperature from going too high. By using the variable set point as a trigger to partially close or fully close the valve, the system is able to more efficiently follow the requirements of the installation on the main circuit. This is because the lowered set point is indicative of a low flow or reduced demand from the installation, and thus keeping the temperature of the heating device water circuit output below this set point makes sure that the installation is not supplied with excess heat. Consequently the efficiency of the system is improved.

By partially closing the valve the flow out of the heating device water circuit can be limited, so that a larger proportion of returning water in the main circuit is mixed with the heated water, leading to a reduced mixed temperature. Thus, the temperature can be reduced to the desired level whilst still operating the heating device. This is especially useful where the heating device is a CHP unit as it can be beneficial to continue to run the CHP unit to produce power and to produce heat which may be stored.

Closing the valve may also trigger shut down of a heating device connected to the heating device water circuit. Alternatively, the heating device water circuit may include a heat storage means, and when the valve is closed the heating device may be used to fill the heat storage. The heat storage can also be filled when the valve is partially closed.

In another preferred embodiment the first sensor input is arranged to receive a temperature measurement from a sensor on the heating device water circuit that detects if a heat storage tank on the circuit is empty or is at a minimum level as discussed above. This sensor could for example be the sensor known in the art as T₁. The set point may then be adjusted if the heat storage is empty and the current set point is not being reached. The fact that the set point is not being reached indicates that the heating device cannot meet demand for that temperature, but in order to avoid the need to use a secondary heating device it is beneficial to use a variable set point. A reduction of a few degrees will not generally affect the installation, and it can avoid switching between heat sources. Thus, preferably, if the heat storage is empty and the current set point is not being reached then the set point is reduced by a set amount, for example 1°C. The set point may be reduced in 1°C increments up to a set maximum reduction, which may be 5°C for example. If the set point at a maximum reduction cannot be met, then the valve is preferably closed. In a preferred embodiment, this automatically triggers activation of a secondary heat source, as it results in the mixing temperature being below a minimum input temperature of the secondary heat source.

This arrangement to control the valve can be used instead of or in addition to the control based on return temperature, i.e. a controller with three temperature sensor inputs may be used.

It will be appreciated that the apparatus of the first aspect or the fifth example can be advantageously combined with the water heating apparatus of the third example as discussed above. Preferred embodiments therefore consists of a water heating apparatus including the valve apparatus of the first aspect or the fifth example. In this case the heating device water circuit is the water circuit for the combined heat and power device, and the secondary heating device may be situated on the main circuit upstream of the second temperature sensor.

The apparatus of the first aspect or the fifth example provides a convenient way to switch between the first and second modes by opening and closing the connection to the main circuit. In the first mode when the secondary heating device is operating the valve is closed. When the CHP unit is being used in the second mode to supply heat, the valve apparatus can be used to prevent flow reversal and overheating as discussed above. The controller may be supplied with additional inputs for the heat demand of the installation and/or the amount of heat stored in the heat storage in order to allow the controller to control the mode of operation of the water heating apparatus. Alternatively the controller or the valve may be linked to another control unit, which monitors heat demand and/or stored heat and controls the CHP unit and the secondary heating unit.

In a particularly preferred embodiment, the combined apparatus is arranged to be controlled in the second mode by the valve apparatus of the first aspect or the fifth example. Preferably the valve apparatus provides control based on the preferred embodiments discussed above.

In a sixth example method that can be combined with the method of the second aspect, there is provided a method of controlling a valve for controlling flow of water from a heating device water circuit output to a main water circuit, the method comprising measuring a first temperature in the heating device water circuit, measuring a second temperature of the main water circuit downstream of the heating device water circuit output, and at least partially closing the valve when the measured temperatures meet certain conditions.

The conditions may include closing the valve when the second temperature sensor input exceeds a certain level. The certain level set as discussed above.

In a preferred embodiment the first temperature is a measurement of the heating device water circuit return temperature as discussed above. In this case the conditions preferably include a variable mixing set point for the second temperature, the set point being initially set at a maximum desired mixed temperature and being reduced by a certain amount dependant on by how much the first temperature exceeds a preset level, the valve being closed when the first temperature reaches the set point. The set point may be fixed and varied as in the example above.

The method may include partially closing the valve when the first temperature is a certain amount below the mixing set point. The valve may be partially closed when the first temperature exceeds a maximum level. The maximum level may be set as discussed above.

In another preferred embodiment the second sensor input is arranged to receive a temperature measurement from a sensor on the heating device water circuit that detects if a heat storage tank on the circuit is empty or nearing empty. This sensor could for example be the sensor known as T₁. The conditions may then include adjustment of the set point if the heat storage is empty and the current set point is not being reached. This control method can be used instead of or in addition to the control based on return temperature, i.e. a controller with three temperature sensor inputs may be used.

As discussed above, preferably, if the heat storage is empty and the current set point is not being reached then the set point is reduced by a set amount, for example 1°C. The conditions may include the set point being reduced in 1°C increments up to a set maximum reduction, which may be 5°C for example. If the set point at a maximum reduction cannot be met, then the valve is preferably closed. In a preferred embodiment, this automatically triggers activation of a secondary heat source, as it results in the mixing temperature being below a minimum input temperature of the secondary heat source.

As discussed above for the apparatus of the first aspect or the fifth example, the method of the second aspect or the sixth example can be advantageously combined with the method of supplying heated water discussed above. A preferred embodiment therefore consists of a method of supplying heated water in a water heating apparatus including the apparatus discussed above in relation to the first aspect or the fifth example, the method incorporating the method steps discussed above in relation to the second aspect or the sixth example.

Preferred embodiments of the invention will now be described, by way of example only, and with reference to the accompanying drawing in which:
Figure 1 is a graph of on-off cycling in a prior art system,
Figure 2 shows a hot water system,
Figure 3 is a graph of sequenced operation of the hot water system, and
Figure 4 shows an alternate hot water system, which can also be operated as shown in Figure 3.

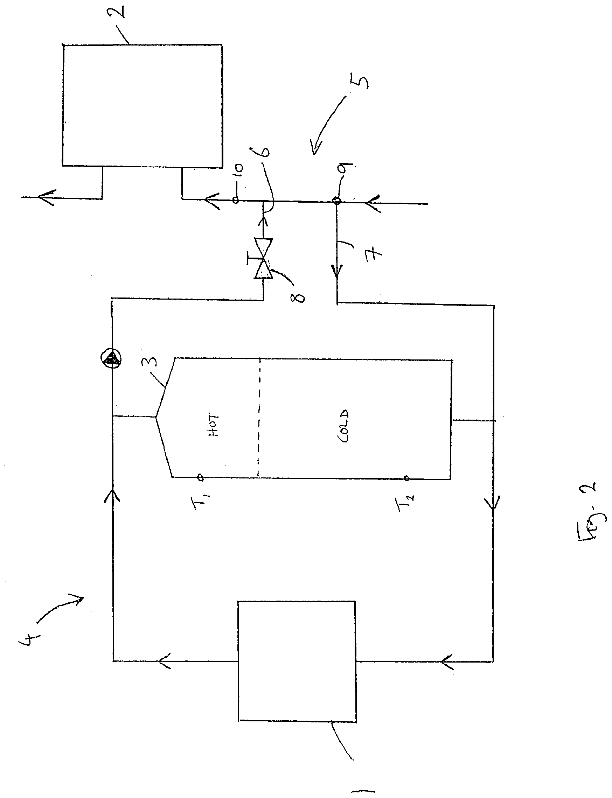

In the hot water system of Figure 2, a primary heating device in the form of a CHP unit 1 and a secondary heating device in the form of a boiler 2. The CHP unit is connected to supply heated water to a heat storage means in the form of a heat storage tank 3. The CHP unit 1 and heat storage tank 3 are on the heating device water circuit 4, which is joined to the main circuit 5 by an outlet 6 and return 7. The details of the water circuits and their connections are conventional, and further features of the system such as pumps and so on are also conventional. The direction of circulation of the water is shown by the arrows. The return 7 and outlet 6 are connected to the main circuit 5 upstream of the boiler 2. A valve 8 controls the flow along the outlet 6. An installation such as a domestic hot water and heating system can be on the main circuit 5 downstream of the boiler 2.

To operate this hot water system in the first mode and second mode discussed above, the valve 8 is used to open and close the outlet 6. Switching between the first mode and the second mode is based on the conditions set out above. A controller (not shown) monitors the demand and stored heat and controls the valve 8, CHP unit 1 and boiler 2 accordingly.

In the first mode the valve 8 is closed so that water cannot flow between the heating device water circuit 4 and the main circuit 5, and the boiler 2 is operated to meet the heat demand of the installation. Whilst the valve 8 is closed operation of the CHP unit 1 can continue to fill the storage tank 3. With the valve 8 closed cooling water for the CHP unit is supplied by the cold water in the tank 3.

In the second mode the valve 8 is opened, the boiler 2 is shut down and hot water for the installation is supplied by the CHP unit 1 and heat storage tank 3. In this mode cooling water for the CHP unit 1 and cold water to replace the hot water leaving the storage tank 3 is supplied from the main circuit 5 via the return 7. In some circumstances the heat demand of the installation may be less than the heat production of the CHP unit 1, and in this case the valve 8 can be partially closed, such that only some of the heat produced by the CHP unit 1 is supplied to the main circuit, and the remainder is used to fill the storage tank 3.

The maximum and minimum levels of stored heat can be determined by sensors T₁ and T₂ as is known in the art. In the Figure, the amount of stored heat is shown as being between T₁, the minimum required stored heat, and T₂, the maximum level of stored heat. Thus, if the system is in the first mode, and is using heat from the CHP unit 1 to fill the storage tank 3, then the amount of hot water in the tank 3 can be increased until T₂ is reached, at which point operation should switch to the second mode.

If the system is already in the second mode, with hot water from the tank 3 being used to meet the heat demands of the installation, then the second mode can continue, depleting the amount of stored hot water until T₁ is reached, at which point the first mode could be used again, allowing the boiler 2 to meet demand whilst the CHP unit 1 refills the tank 3.

However in an alternative embodiment, before switching to the first mode, the valve apparatus can first use a reduction in the set point to allow the CHP unit to meet demand at a reduced level and avoid switching to the boiler. The set point is reduced by up to 5°C, and if the reduced set point cannot be met, then the valve is closed to switch operation to the first mode. By using a reducing set point before changing to the boiler, it is possible to further reduce the number of switches between the two heat sources, as the second mode will be used for a longer period.

In fact, in some circumstances it may be desirable to disable the first mode, so that the CHP unit operates continually to supply the installation. In this case, the maximum reduction of the set point can be larger.

In this embodiment, the controller of the hot water system receives temperature measurements of the set point, for example from a second temperature sensor 10 discussed below, and of the heat storage temperature T₁.

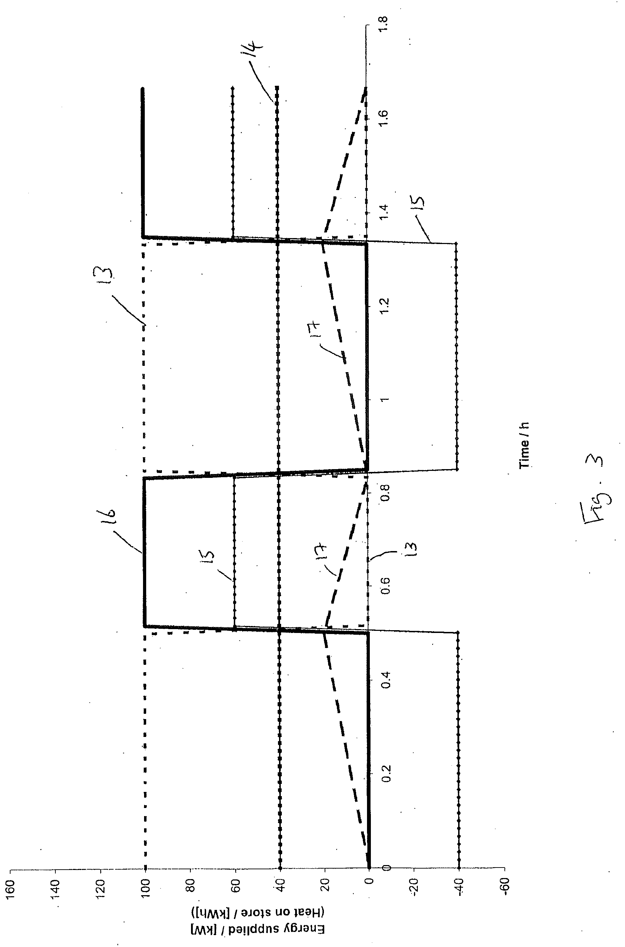

Figure 3 illustrates operation of the hot water system using the first and second modes sequentially in order to meet electricity and heat demands from an installation. To allow comparison with the prior art situation of Figure 1, the electricity demand is such that the CHP unit 1 produces 40 kW of heat as shown by the line 14, and the heat demand is 100 kW. The heat energy produced by the boiler 2 is shown by the dashed line 13. Figure 3 also includes a line 15 showing the heat supplied by the heat storage means 3. When the heat supplied by the heat storage means 3 is negative, this indicates that the heat storage means 3 is receiving heat from the CHP unit 1. When the line 15 is positive, then heat is being released from the heat storage means 3, and the CHP unit 1 is supplying heat to the installation and not to storage. The combined heat output of the CHP unit 1 and the heat storage means 3 is shown by the bold line 16. The final line shown in Figure 3 is a dashed line 17 representing the amount of heat stored in the heat storage means 3.

Figure 3 shows the hot water system operating as follows. First, at time zero, the system is in the first mode, with the boiler providing all of the heat required by the installation. The CHP unit 1 is running and is producing 40 kW of heat, which is supplied to the heat storage means 3 as shown by the negative line 15. Thus, the dashed line 17 rises. When the amount of heat storage hits a set level, in this case 20 kWh of heat, operation switches to the second mode, with the boiler 2 being shut down, and the heat storage means 3 and CHP unit 1 providing the heat as shown by bold line 16. This decreases the amount of heat in storage as shown by dashed line 17. When the heat in storage hits a minimum level operation switches back to the first mode so that the heat storage can be refilled. As can be seen, the hot water system is controlled so that the boiler is turned on and off much less frequently than the prior art system of Figure 1, being cycled only two times, instead of twenty.

Figure 3 shows one particular maximum and minimum heat storage level, but it will be appreciated that other levels could be selected depending on the particular components used and the requirements of the system.

To provide control of the valve to avoid reversal of flow and the other problems discussed above, the hot water system of Figure 2 includes a first temperature sensor 9 that measures the water temperature at the return 7, and the second temperature sensor 10 that measures the water temperature in the main circuit 5, between the outlet 6 and the boiler 2. When the CHP unit 1 or heat storage tank 3 is supplying heat to the main circuit 5 then this second temperature is the mixed temperature of the returning water in the main circuit 5, and the heated water from the heating device circuit 4.

The two sensors 9, 10 are connected to a controller, such as a Danfoss ECL type controller or similar, with two temperature inputs and one control output. The controller is not shown, and may be in addition to or part of the controller discussed above. The controller operates with a variable mixing set point for the second sensor 10, the set point being initially set at a maximum desired mixed temperature and being reduced by a certain amount dependant on by how much the return temperature sensed by the first sensor 9 exceeds a preset level. When the return temperature reaches the set point, the valve 8 is closed.

It will be appreciated from the above discussion that the controller and the two temperature sensors can usefully be used along with sequential control of the CHP unit 1 and boiler 2 in the first and second modes. In this case the controller may perform the control function for monitoring the conditions necessary to change between the first mode and second mode, or alternatively two separate control devices may be used. However, it is not essential that this type of sequential control is used in order to attain the benefits of the valve apparatus, which can be used independently.

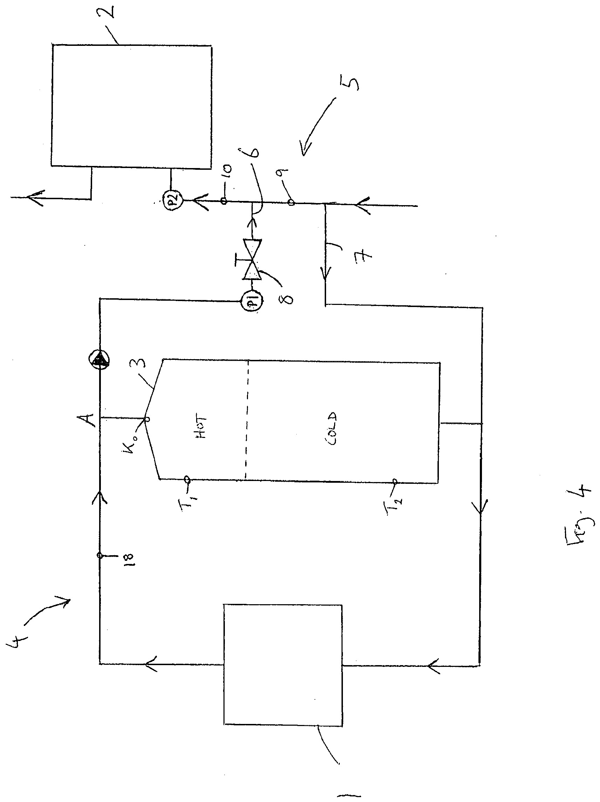

An alternative arrangement to that of Figure 2 is shown in Figure 4. The features of the main water circuit 5 and the heating device water circuit 4 are generally the same. However the first temperature sensor 9 is now placed on the main water circuit 5 between the connections to the return 7 and outlet 6, in order to provide best operation using the control system set out below. The hot water system includes two pumps, a first pump P1 located upstream of the valve 8 and a second pump P2 between the second temperature sensor 10 and the boiler 2.

A control system is used to control the valve 8 so as to keep the forward temperature, i.e. the temperature at the second temperature sensor 10, at the user set point. The user set point is the desired hot water temperature for the installation. In this arrangement, the set point remains fixed, although the actual temperature supplied is of course allowed to vary to some degree.

The control system includes a valve regulation mechanism and performs the following key functions:
(i) Calculating an operational set point and preventing reverse filling of storage when running out of heat.
(ii) Calculating how much the valve needs to open or close to raise/lower the temperature on the forward sensor so it meets the operational set point, and controlling adjustment of the valve accordingly.
(iii) Determining an assumed flow rate though P2 on the main circuit compared to the maximum flow rate through P1.
(iv) Changing the assumed relative flow rate, when detected temperatures indicate that it is not correct.
(v) Detecting a flow reversal of hot water and adjusting the valve to prevent the reverse flow

The first thing done is to calculate if it is possible to meet the demand of the user set point. This is done by looking at a sensor 18, which shows the temperature of the water from the CHP unit 1, and a sensor K₀ at the hot end of the heat storage tank 3 in order to determine what temperature water is available and consequently to calculate what the highest possible forward set point can be. The calculation takes into account the return temperature indicated by the first sensor 9, and also the assumed flow rate at P2, which is discussed in more detail below. If the highest possible set point is higher than the user set point, the user set point is used as the operational set point, else the highest possible set point is used as the operational set point. The system is then regulated with the aim of maintaining a forward temperature at the second temperature sensor 10 which correspond to the operational set point.

For example, the user set point may be 80°C. If the CHP and storage can supply water above 80°C then the operational set point is 80°C, with the hotter water being mixed with cold returning water to achieve the required temperature. However if the CHP and storage can only supply water a maximum of 70°C, then the operational set point becomes 70°C.

The reason for calculating an operational set point is to keep control of the valve 8, even when the system is running out of hot water. In a conventional valve control system, when it is detected that the user set point is not being met, there is a tendency to open the valve 8 to its fullest extent in an attempt to increase the forward temperature to meet demand. As a result there is a risk that water flow will reverse at the outlet 6, and re-enter the heating device water circuit 4 through the return 7, then flowing through the storage 3 in reverse at the maximum rate of the pump P1.

This has the consequence that when the CHP unit 1 is capable of delivering hot water, this hot water will get mixed up with the cold water when passing the output of the storage tank 3 at point A, with the resulting partially heated water continuing in reverse flow. With the valve 8 open, the reverse flow will continue until the whole storage tank 3 is filled in reverse with semi-hot water, and the set point can be reached by mixing of this semi-hot water at A with hot water from the CHP unit 1. Only at that point will the valve 8 start closing again. This cycle could take hours and whilst it goes on the installation is being supplied with water at much less than the temperature asked for. In addition, when the system has finally filled the storage with semi-hot water and starting operating normally again, the cooling capacity provided by the storage 3 for the CHP unit 1 is severely reduced.

With the operational set point as above, the valve 8 will close when no more hot water is available. Until that point, the CHP unit 1 can supply hot water at its highest output temperature even when the storage tank 3 is empty. Whilst the installation still receives water at less than the required user set point, the shortfall is smaller than when the water from the CHP unit 1 is being cooled by mixing at A, resulting from reverse flow. When the CHP unit 1 is not operating then the valve is closed and hot water can then be supplied by the boiler 2 as discussed above. When the CHP unit 1 is operating again, hot water will be available quickly after and the valve 8 is re-opened to supply water at the operational set point.

To maintain the forward temperature at the operational set point the valve needs to open or close in order to raise or lower the water temperature. The valve regulating mechanism is operated based on a "neutral band" and a "proportional band", which are temperature ranges located symmetrically either side of the operational set point. The control system works on a regulating cycle of set length, and in each regulating cycle the valve is adjusted, if required, by opening or closing it as set out below.

The function of the neutral band is to define an area where the valve 8 does not need to move, enabling a small variation of temperature to occur on either side of the operational set point. The neutral band limit is calculated on basis of the return temperature and the forward temperature as measured by the first temperature sensor 9 and second temperature sensor 10, and on either the CHP/storage hot temperature as indicated by the sensor K₀ and/or the sensor 18. The calculation also takes into account the assumed flow rate through the pump P2 (compared to the P1 maximum flow) and a set minimum valve movement time. The valve 8 takes a certain time to move from fully open to fully closed, for example 60 seconds, and the minimum valve movement might be 0.5 second for example.

The neutral band is calculated as being the amount by which the temperature is expected to rise or fall if the valve 8 is opened or closed with the decided minimum movement time. This has to take the surrounding temperatures and flows into account, because they all have an effect on the temperature movement. For example, if the CHP/storage hot temperature is high compared to the main circuit return temperature and the P1 maximum flow rate is high compared to the P2 flow rate, then there will be a relatively large change in the forward temperature following adjustment of the valve 8, so the neutral band is large. If the return temperature is hotter and is close to the temperature at the sensor K₀ and/or the sensor 18, or the P2 flow rate is higher then the valve 8 must move much more to obtain the same change in forward temperature, so the neutral band is smaller.

The proportional band is calculated in a similar fashion, and is based on a set maximum valve movement time, which corresponds to the length of the regulating cycle. This might for example be 5 seconds for a valve with a 60 second total movement time. The outer end of the proportional band is hence the expected change in forward temperature when the valve 8 is opened or closed for the entire regulating cycle. For each regulating cycle, the control system determines and applies the required valve movement until the temperature is within the neutral band.

If the forward temperature is at the proportional band outer limit, the valve will move by the maximum time to increase or decrease the forward temperature and move it back to the operational set point. When the forward temperature is outside the proportional band, the valve 8 will hence move constantly until the temperature is returned to the proportional band.

When the forward temperature is within the proportional band but outside the neutral band, the valve 8 is moved by a percentage of its maximum movement time, with the percentage depending on where the forward temperature is in the proportional band. For example, the valve 8 might move by 3 seconds out of a maximum of 5 seconds (for a 5 second regulating cycle).

If the forward temperature is in the proportional band, just next to the neutral band limit, the valve 8 will move the minimum valve movement time.

To do the above calculation, we need to assume a relative flow though P2 on the main pipe compared to the maximum possible flow through P1. The flow rates through P1 and P2 are not known in absolute values. The flow rate of water through the output 6 of the CHP circuit 4 is controlled by the valve 8 and varies from zero to a maximum which is determined by flow through P1. The flow through P2 is assumed to be a flow rate relative to this maximum.

In a typical system, with only one CHP unit 1, the pumps P1 and P2 will be of a similar size and the relative flow at P2 is hence initially assumed to be a half of the maximum possible flow through P1. Of course, the initially assumed value can differ depending on the particular system.

Flow rate at P2 will change often depending on the conditions in the installation and the flow through P2 may be unstable due to sudden changes in consumption, for example changes caused by turning a shower or tap on or off.

The assumption of the relative flow rate at P2 is very important for the precision of the regulation mechanism, as it affects the temperature bands that are used to control the valve 8. Consequently, it is of benefit to have a mechanism to adjust the assumed flow rate depending on measured conditions.

A set of rules is implemented to take care of different situations that will indicate that the assumed relative flow is not appropriate and needs adjustment.

### Rule 1: Falling flow through P2.

If the flow rate through P2 falls, for example in the event of a drop in hot water demand, then flow through P1 will be too high. The excess hot water exiting the outlet 6 will not be able to flow onward to the installation and will flow the wrong way towards the CHP circuit return 7 and past the first sensor 9. This sensor 9 will hence detect a rapid temperature rise.

In response to such a rapid temperature rise the control system will trigger a flow reversal prevention system as set out below.

### Rule 2: Forward temperature crosses over the neutral band in a short time.

This can occur when the real flow through both P1 and P2 is fairly constant, but the assumed relative flow is too high. In this scenario, a movement on the valve 8 leads to the temperature at the second sensor 10 passing from outside the neutral band on one side, over the neutral band, to out outside the neutral band area on the other side within a short time. For example, this time might be 2 minutes. The reason for this is that the neutral band is too small as a result of an assumed rate for P2 which is too high.

In response to this occurrence, the assumed flow at P2 is reduced, which makes the neutral and proportional bands larger and reduces unnecessary movement of the valve 8.

### Rule 3: Rapid fall of forward temperature.

If the forward temperature measured by the second sensor 10 is falling rapidly, it indicates that the flow through P2 has made a sudden increase, and more cold water is returning in the main water circuit 5 to mix with the hot water from the CHP circuit outlet 6.

In response to this, the assumed flow rate at P2 is increased. This makes the neutral and proportional bands smaller and also affects the calculated set point. As a result, the control system will be able to adjust the valve 8 in a more appropriate fashion in order to maintain hot water supply.

### Rule 4: Forward temperature outside the neutral band for 3 minutes.

If the assumed flow through P2 is too low, then it can be hard for small adjustments of the valve 8 to move the temperature toward or into the neutral band. Therefore, if for more than a set period, in this case more than 3 minutes, adjustment of the valve 8 has been unable to obtain a temperature inside the neutral band, then the system responds by adjusting the assumed relative flow to a higher value. This results in a narrower neutral band, which will prompt larger valve adjustments as the measured temperature will be further from the neutral band.

### Rule 5: Forward temperature in outer half of the neutral band for 5 minutes.

If the forward temperature has been in the outer areas of the neutral band for some time then this can indicate that the assumed relative flow is too low leading to a neutral band that is too large. If this is the case, then the system will not be operating in an optimal fashion.

Therefore, to ensure that the neutral band is not too wide due to a conservative flow assumption, the assumed relative flow should be increased. Hence, if the forward temperature is in the outer half of the neutral band for more than a set time, in this case 5 minutes, then the assumed flow at P2 is increased. If the initial assumption was correct, counter-action from Rule 2 (and 3) will soon be initiated and bring the flow-assumption back to initial level. The primary function of rule 5 is to keep the system out of deadlocks.

As noted above, in rule 1 a sharp rise in temperature at the first sensor 9 indicates a falling flow through P2 and action is required to prevent hot water exiting the CHP circuit outlet 6 from flowing in the wrong direction. Upon detection of a rapid increase in temperature on the return temperature sensor, the control system takes several steps. Firstly, all variables in the regulating mechanism are 'locked' so they will be preserved and not altered until the situation is cleared. Thus, the operational set point, the neutral band and the proportional band are fixed at the values just prior to the flow reversal. At the same time valve 8 will be closed, first for a full regulation period, i.e. 5 seconds in the present case, and if the problem is not resolved, then the valve will close for a shorter time for every regulation period until the problem is cleared and the fast temperature rise is stopped and is reversed. For example, where the regulation period is 5 seconds the valve might continue to close for 2 seconds out of every 5 seconds. Finally, the assumed flow rate through P2 is severely reduced so that later operation takes account of the falling flow rate at P2.

After the reverse flow situation is cleared, and normal operation has continued for a while, for example for 1 minute, then the locked variables are released again and can be altered by the regulation mechanism as set out above.

The control system must also take into account the delay that occurs as water travels from the valve 8 to the sensors 9, 10. When the regulating mechanism actuates the valve, it is done on basis of sensor inputs, but the water needs to move from the physical location of the valve 8 through the piping and into the main pipe where it will mix and then eventually pass through the main pipe to the forward sensor 10, when itself takes time to heat up or cool down. The exact total time for this process is installation dependent. Pipe dimensions, flow velocities, pipe lengths and the sensor reaction time determine the total time delay. To prevent the regulating mechanism from going into oscillation, an integral term is used along with the proportional adjustment of the valve.

## Claims

1. A hot water system comprising:
a heating device water circuit (4) connected via an input (7) and an output (6) to a main water circuit (5);
a first temperature sensor (9);
a second temperature sensor (10); and
an apparatus for controlling connection of the heating device water circuit to the main water circuit, the connection including a valve (8) for controlling flow of water from the heating device water circuit output to the main water circuit, the apparatus comprising:
a control system for controlling operation of the valve, wherein the control system has two sensor inputs for measurements of temperature from the first and second temperature sensors,
wherein:
the first temperature sensor is installed at a location upstream of the heating device water circuit output and in a flow path extending between this output and a heating devices (1) for heating water, in the heating device water circuit; and
the second temperature sensor is for measuring a forward temperature of the main water circuit and is installed on the main water circuit downstream of the heating device water circuit output, **characterized in that**
the first temperature sensor is for measuring a return temperature.

2. A system as claimed in claim 1, wherein the control system is arranged to determine an operational set point based on the temperature of water that can be supplied by the heating device water circuit, and to control the valve to adjust the forward temperature toward the operational set point.

3. A system as claimed in claim 2, wherein the control system is arranged to measure the forward temperature at a set interval, corresponding to a regulation cycle time, and to adjust the valve in each cycle based on how far the forward temperature reading differs from the set point; preferably
wherein the control system utilises a neutral band comprising a temperature range either side of the set point and is arranged such that no valve adjustment is made when the forward temperature is in the neutral band; and further preferably
wherein the neutral band is determined based on the amount by which the forward temperature is expected to rise or fall from the set point if the valve is opened or closed with a set minimum movement time.

4. A system as claimed in claim 3, wherein the control system utilises a proportional band comprising a temperature range either side of the set point and is arranged such that when the forward temperature is in the proportional band the valve is adjusted in proportion to the difference between the forward temperature and the set point; preferably
wherein proportional band is calculated based on the amount by which the temperature is expected to rise or fall from the set point if the valve is opened or closed with a set maximum movement time; and further preferably
wherein the maximum movement time corresponds to the regulation cycle time.

5. A system as claimed in claim 3 or 4, wherein the calculation of the neutral band and/or proportional band is based on an assumption of a flow rate through the main circuit compared to the maximum possible flow rate through the heating device water circuit output.

6. A system as claimed in claim 5 wherein the control system is arranged to control the connection using one or more of the following rules:
rule 1: if there is a rapid increase in the return temperature, then a flow reversal prevention system is triggered;
rule 2: if the forward temperature crosses over the neutral band in a set time, then the assumed flow rate is reduced;
rule 3: if the forward temperature measured by the second sensor is falling rapidly, then the assumed flow rate is increased;
rule 4: if the forward temperature remains outside the neutral band for a set time then the assumed relative flow is adjusted to a higher value; and
rule 5: if the forward temperature remains in the outer half of the neutral band for a set time then the assumed relative flow is increased; preferably
wherein the control system is arranged to utilise rule 1 and the control system is arranged to implement the flow reversal prevention system by: closing the valve continually for a set time, and then continuing to close the valve at a lesser rate until the temperature increase has stopped and/or is reversed; locking the values of the operational set point, the neutral band and the proportional band; and reducing the assumed flow rate; and further preferably
wherein the control system is arranged to release the locked variables when the rapid temperature increase has stopped and/or is reversed and normal operation has continued for a set period.

7. A system as claimed in any of claims 1 to 6, wherein there is a secondary heat source (2) on the main water circuit, and fully closing the valve triggers activation of the secondary heat source; and/or
wherein the heating device water circuit includes a heat storage means (3), and when the valve is fully closed or partially closed water from the heating device is used to fill the heat storage means.

8. A method of controlling a valve (8) for controlling flow of water from a heating device water circuit (4) output (6) to a main water circuit (5), the method comprising:
measuring (9) a return temperature at a location upstream of the heating device water circuit output and in a flow path extending between this output and a heating device (1) for heating water, in the heating device water circuit;
measuring (10) a forward temperature of the main water circuit at a location downstream of the heating device water circuit output; and
adjusting the valve when the measured temperatures meet certain conditions.

9. A method as claimed in claim 8, comprising determining an operational set point based on the temperature of water that can be supplied by the heating device water circuit, and controlling the valve to adjust the forward temperature toward the operational set point.

10. A method as claimed in claim 9, comprising measuring the forward temperature at a set interval, corresponding to a regulation cycle time, and adjusting the valve in each regulation cycle based on how far the forward temperature reading differs from the set point.

11. A method as claimed in claim 10, wherein no valve adjustment is made when the forward temperature is in a neutral band, the neutral band comprising a temperature range either side of the set point; preferably
the method comprising determining the neutral band based on the amount by which the forward temperature is expected to rise or fall from the set point if the valve is opened or closed with a set minimum movement time.

12. A method as claimed in claim 10 or 11, wherein the valve is adjusted in proportion to the difference between the forward temperature and the set point when the forward temperature is in a proportional band, the proportional band comprising a temperature range either side of the set point; preferably
the method comprising determining the proportional band based on the amount by which the temperature is expected to rise or fall from the set point if the valve is opened or closed with a set maximum movement time; and further preferably
wherein the maximum movement time corresponds to the regulation cycle time.

13. A method as claimed in claim 11 or 12, wherein the calculation of the neutral band and/or the proportional band is based on an assumption of a flow rate through the main circuit compared to the maximum possible flow rate through the heating device water circuit output.

14. A method as claimed in claim 13, comprising using one or more of the following rules:
rule 1: if there is a rapid increase in the return temperature, then a flow reversal prevention system is triggered;
rule 2: if the forward temperature crosses over the neutral band in a set time, then the assumed flow rate is reduced;
rule 3: if the forward temperature measured by the second sensor is falling rapidly, then the assumed flow rate is increased;
rule 4: if the forward temperature remains outside the neutral band for a set time then the assumed relative flow is adjusted to a higher value; and
rule 5: if the forward temperature remains in the outer half of the neutral band for a set time then the assumed relative flow is increased; preferably
wherein rule 1 is used and the flow reversal prevention system comprises:
closing the valve continually for a set time, and then continuing to close the valve at a lesser rate until the temperature increase has stopped and/or is reversed; locking the values of the operational set point, the neutral band and the proportional band; and
reducing the assumed flow rate; and further preferably
the method comprising releasing the locked variables when the rapid temperature increase has stopped and/or is reversed and normal operation has continued for a set period.

15. A method as claimed in any of claims 8 to 14, wherein there is a secondary heat source (2) on the main water circuit, and fully closing the valve triggers activation of the secondary heat source; and/or
wherein the heating device water circuit includes a heat storage means (3), and when the valve is fully closed or partially closed water from the heating device is used to fill the heat storage means.

## Patentansprüche

1. Warmwassersystem, umfassend:
einen Heizeinrichtungs-Wasserkreislauf (4), der über einen Eingang (7) und einen Ausgang (6) mit einem Hauptwasserkreislauf (5) verbunden ist;
einen ersten Temperatursensor (9);
einen zweiten Temperatursensor (10); und
eine Vorrichtung zum Steuern der Verbindung des Heizeinrichtungs-Wasserkreislaufs mit dem Hauptwasserkreislauf, wobei die Verbindung ein Ventil (8) zum Steuern des Wasserstroms von dem Ausgang des Heizeinrichtungs-Wasserkreislaufs zu dem Hauptwasserkreislauf beinhaltet, wobei die Vorrichtung Folgendes umfasst:
ein Steuersystem zum Steuern des Betriebs des Ventils, wobei das Steuersystem zwei Sensoreingänge für Temperaturmessungen von dem ersten und dem zweiten Temperatursensor aufweist, wobei:
der erste Temperatursensor an einer Stelle stromaufwärts des Ausgangs des Heizeinrichtungs-Wasserkreislaufs und in einem Strömungsweg installiert ist, der sich zwischen diesem Ausgang und einer Heizeinrichtung (1) zum Erwärmen von Wasser in dem Heizeinrichtungs-Wasserkreislauf erstreckt; und
der zweite Temperatursensor zum Messen einer Vorlauftemperatur des Hauptwasserkreislaufs dient und an dem Hauptwasserkreislauf stromabwärts des Ausgangs des Heizeinrichtungs-Wasserkreislaufs installiert ist, **dadurch gekennzeichnet, dass** der erste Temperatursensor zum Messen einer Rücklauftemperatur dient.

2. System nach Anspruch 1, wobei das Steuersystem ausgeführt ist, einen Betriebssollwert basierend auf der Temperatur von Wasser zu bestimmen, das von dem Heizeinrichtungs-Wasserkreislauf zugeführt werden kann, und das Ventil zu steuern, um die Vorlauftemperatur auf den Betriebssollwert einzustellen.

3. System nach Anspruch 2, wobei das Steuersystem ausgeführt ist, die Vorlauftemperatur bei einem eingestellten Intervall zu messen, das einer Regelzykluszeit entspricht, und das Ventil in jedem Zyklus basierend darauf einzustellen, inwieweit sich der Vorlauftemperaturwert von dem Sollwert unterscheidet; vorzugsweise
wobei das Steuersystem ein neutrales Band benutzt, das einen Temperaturbereich auf jeder Seite des Sollwerts umfasst und derart ausgeführt ist, dass keine Ventileinstellung vorgenommen wird, wenn die Vorlauftemperatur im neutralen Band liegt; und weiter vorzugsweise
wobei das neutrale Band basierend auf der Menge bestimmt wird, um welche die Vorlauftemperatur erwartungsgemäß von dem Sollwert steigt oder fällt, falls das Ventil mit einer eingestellten minimalen Bewegungszeit geöffnet oder geschlossen wird.

4. System nach Anspruch 3, wobei das Steuersystem ein proportionales Band benutzt, das einen Temperaturbereich auf beiden Seiten des Sollwerts umfasst und derart ausgeführt ist, dass, wenn die Vorlauftemperatur im proportionalen Band liegt, das Ventil proportional zur Differenz zwischen der Vorlauftemperatur und dem Sollwert eingestellt wird; vorzugsweise
wobei das proportionale Band basierend auf der Menge berechnet wird, um welche die Temperatur erwartungsgemäß von dem Sollwert steigt oder fällt, falls das Ventil mit einer eingestellten maximalen Bewegungszeit geöffnet oder geschlossen wird; und weiter vorzugsweise
wobei die maximale Bewegungszeit der Regelzykluszeit entspricht.

5. System nach Anspruch 3 oder 4, wobei die Berechnung des neutralen Bandes und/oder des proportionalen Bandes auf einer Annahme einer Strömungsrate durch den Hauptkreislauf im Vergleich zu der maximal möglichen Strömungsrate durch den Ausgang des Heizeinrichtungs-Wasserkreislaufs basiert.

6. System nach Anspruch 5, wobei das Steuersystem ausgeführt ist, die Verbindung unter Verwendung einer oder mehrerer der folgenden Regeln zu steuern:
Regel 1: Falls die Rücklauftemperatur schnell ansteigt, dann wird ein Strömungsumkehr-Verhinderungssystem ausgelöst;
Regel 2: Falls die Vorlauftemperatur das neutrale Band innerhalb einer eingestellten Zeit überschreitet, dann wird die angenommene Strömungsrate reduziert;
Regel 3: Falls die Vorlauftemperatur, die von dem zweiten Sensor gemessen wird, schnell abfällt, dann wird die angenommene Strömungsrate erhöht;
Regel 4: Falls die Vorlauftemperatur für eine eingestellte Zeit außerhalb des neutralen Bandes bleibt, dann wird die angenommene relative Strömung auf einen höheren Wert eingestellt; und
Regel 5: Falls die Vorlauftemperatur für eine eingestellte Zeit innerhalb der äußeren Hälfte des neutralen Bandes bleibt, dann wird die angenommene relative Strömung erhöht; vorzugsweise
wobei das Steuersystem ausgeführt ist, Regel 1 zu benutzen, und das Steuersystem ausgeführt ist, das Strömungsumkehr-Verhinderungssystem zu implementieren durch: kontinuierliches Schließen des Ventils für eine eingestellte Zeit und dann fortgesetztes Schließen des Ventils bei einer geringeren Rate, bis der Temperaturanstieg angehalten hat und/oder umgekehrt wird; Sperren der Werte des Betriebssollwerts, des neutralen Bandes und des proportionalen Bandes; und Reduzieren der angenommenen Strömungsrate; und weiter vorzugsweise
wobei das Steuersystem ausgeführt ist, die gesperrten Variablen freizugeben, wenn der schnelle Temperaturanstieg angehalten hat und/oder umgekehrt wird, und der normale Betrieb für einen eingestellten Zeitraum fortgesetzt wurde.

7. System nach einem der Ansprüche 1 bis 6, wobei eine sekundäre Wärmequelle (2) an dem Hauptwasserkreislauf vorhanden ist und ein vollständiges Schließen des Ventils die Aktivierung der sekundären Wärmequelle auslöst; und/oder
wobei der Heizeinrichtungs-Wasserkreislauf Wärmespeichermittel (3) beinhaltet, und wenn das Ventil vollständig geschlossen oder teilweise geschlossen ist, Wasser von der Heizeinrichtung verwendet wird, um die Wärmespeichermittel zu füllen.

8. Verfahren zum Steuern eines Ventils (8) zum Steuern der Wasserströmung von einem Ausgang (6) eines Heizeinrichtungs-Wasserkreislaufs (4) zu einem Hauptwasserkreislauf (5), wobei das Verfahren Folgendes umfasst:
Messen (9) einer Rücklauftemperatur an einer Stelle stromaufwärts des Ausgangs des Heizeinrichtungs-Wasserkreislaufs und in einem Strömungsweg, der sich zwischen diesem Ausgang und einer Heizeinrichtung (1) zum Erwärmen von Wasser in dem Heizeinrichtungs-Wasserkreislauf erstreckt;
Messen (10) einer Vorlauftemperatur des Hauptwasserkreislaufs an einer Stelle stromabwärts des Ausgangs der Heizeinrichtungs-Wasserkreislaufs; und
Einstellen des Ventils, wenn die gemessenen Temperaturen bestimmte Bedingungen erfüllen.

9. Verfahren nach Anspruch 8, umfassend das Bestimmen eines Betriebssollwerts basierend auf der Temperatur von Wasser, das von dem Heizeinrichtungs-Wasserkreislauf zugeführt werden kann, und Steuern des Ventils, um die Vorlauftemperatur auf den Betriebssollwert einzustellen.

10. Verfahren nach Anspruch 9, umfassend das Messen der Vorlauftemperatur bei einem eingestellten Intervall, das einer Regelzykluszeit entspricht, und Einstellen des Ventils in jedem Regelzyklus basierend darauf, inwieweit sich der Vorlauftemperaturwert von dem Sollwert unterscheidet.

11. Verfahren nach Anspruch 10, wobei keine Ventileinstellung vorgenommen wird, wenn die Vorlauftemperatur in einem neutralen Band liegt, wobei das neutrale Band einen Temperaturbereich auf jeder Seite des Sollwerts umfasst; vorzugsweise
wobei das Verfahren das Bestimmen des neutralen Bandes basierend auf der Menge umfasst, um welche die Vorlauftemperatur erwartungsgemäß von dem Sollwert steigt oder fällt, falls das Ventil mit einer eingestellten minimalen Bewegungszeit geöffnet oder geschlossen wird.

12. Verfahren nach Anspruch 10 oder 11, wobei das Ventil proportional zu der Differenz zwischen der Vorlauftemperatur und dem Sollwert eingestellt wird, wenn die Vorlauftemperatur in einem proportionalen Band liegt, wobei das proportionale Band einen Temperaturbereich auf jeder Seite des Sollwerts umfasst; vorzugsweise
wobei das Verfahren das Bestimmen des proportionalen Bandes basierend auf der Menge umfasst, um welche die Temperatur erwartungsgemäß von dem Sollwert steigt oder fällt, falls das Ventil mit einer eingestellten maximalen Bewegungszeit geöffnet oder geschlossen wird, und weiter vorzugsweise
wobei die maximale Bewegungszeit der Regelzykluszeit entspricht.

13. Verfahren nach Anspruch 11 oder 12, wobei die Berechnung des neutralen Bandes und/oder des proportionalen Bandes auf einer Annahme einer Strömungsrate durch den Hauptkreislauf im Vergleich zu der maximal möglichen Strömungsrate durch den Ausgang des Heizeinrichtungs-Wasserkreislaufs basiert.

14. Verfahren nach Anspruch 13, umfassend das Anwenden einer oder mehrerer der folgenden Regeln:
Regel 1: Falls die Rücklauftemperatur schnell ansteigt, dann wird ein Strömungsumkehr-Verhinderungssystem ausgelöst;
Regel 2: Falls die Vorlauftemperatur das neutrale Band innerhalb einer eingestellten Zeit überschreitet, dann wird die angenommene Strömungsrate reduziert;
Regel 3: Falls die Vorlauftemperatur, die von dem zweiten Sensor gemessen wird, schnell abfällt, dann wird die angenommene Strömungsrate erhöht;
Regel 4: Falls die Vorlauftemperatur für eine eingestellte Zeit außerhalb des neutralen Bandes bleibt, dann wird die angenommene relative Strömung auf einen höheren Wert eingestellt; und
Regel 5: Falls die Vorlauftemperatur für eine eingestellte Zeit innerhalb der äußeren Hälfte des neutralen Bandes bleibt, dann wird die angenommene relative Strömung erhöht; vorzugsweise
wobei Regel 1 verwendet wird und das Strömungsumkehr-Verhinderungssystem umfasst: kontinuierliches Schließen des Ventils für eine eingestellte Zeit und dann fortgesetztes Schließen des Ventils bei einer geringeren Rate, bis der Temperaturanstieg angehalten hat und/oder umgekehrt ist; Sperren der Werte des Betriebssollwerts, des neutralen Bandes und des proportionalen Bandes; und Reduzieren der angenommenen Strömungsrate; und weiter vorzugsweise
wobei das Verfahren das Freigeben der gesperrten Variablen umfasst, wenn der schnelle Temperaturanstieg angehalten hat und/oder umgekehrt wird, und der normale Betrieb für einen eingestellten Zeitraum fortgesetzt wurde.

15. Verfahren nach einem der Ansprüche 8 bis 14, wobei eine sekundäre Wärmequelle (2) an dem Hauptwasserkreislauf vorhanden ist und ein vollständiges Schließen des Ventils die Aktivierung der sekundären Wärmequelle auslöst; und/oder
wobei der Heizeinrichtungs-Wasserkreislauf Wärmespeichermittel (3) beinhaltet, und wenn das Ventil vollständig geschlossen oder teilweise geschlossen ist, Wasser von der Heizeinrichtung verwendet wird, um die Wärmespeichermittel zu füllen.

## Revendications

1. Système d'eau chaude comprenant :
un circuit d'eau de dispositif de chauffage (4) reliée par l'intermédiaire d'une entrée (7) et d'une sortie (6) à un circuit principal d'eau (5) ;
un premier capteur de température (9) ;
un second capteur de température (10) ; et
un appareil pour commander le raccordement du circuit d'eau de dispositif de chauffage au circuit principal d'eau, le raccordement incluant une vanne (8) pour commander le flux d'eau provenant de la sortie de circuit d'eau de dispositif de chauffage à destination du circuit principal d'eau, l'appareil comprenant :
un système de commande pour commander le fonctionnement de la vanne, dans lequel le système de commande a deux entrées de capteur pour des mesures de température provenant des premier et second capteurs de température,
dans lequel :
le premier capteur de température est installé au niveau d'un emplacement en amont de la sortie de circuit d'eau de dispositif de chauffage et dans un chemin de flux s'étendant entre cette sortie et un dispositif de chauffage (1) pour chauffer de l'eau, dans le circuit d'eau de dispositif de chauffage ; et
le second capteur de température sert à mesurer une température d'aller du circuit principal d'eau et est installé sur le circuit principal d'eau en aval de la sortie de circuit d'eau de dispositif de chauffage, **caractérisé en ce que** le premier capteur de température sert à mesurer une température de retour.

2. Système selon la revendication 1, dans lequel le système de commande est agencé pour déterminer un point de consigne opérationnel sur la base de la température d'eau qui peut être fournie par le circuit d'eau de dispositif de chauffage, et pour commander la vanne pour régler la température de départ vers le point de consigne opérationnel.

3. Système selon la revendication 2, dans lequel le système de commande est agencé pour mesurer la température d'aller à un intervalle fixé, correspondant à un temps de cycle de régulation, et pour régler la vanne dans chaque cycle sur la base de l'écart entre la lecture de température d'aller et le point de consigne ; de préférence
dans lequel le système de commande utilise une bande neutre comprenant une plage de températures de part et d'autre du point de consigne et est agencé de sorte qu'aucun réglage de vanne n'est réalisé quand la température de départ est dans la bande neutre ; et en outre de préférence
dans lequel la bande neutre est déterminée sur la base de la quantité attendue d'augmentation ou de diminution de la température d'aller par rapport au point de consigne si la vanne est ouverte ou fermée avec un temps de mouvement minimal fixé.

4. Système selon la revendication 3, dans lequel le système de commande utilise une bande proportionnelle comprenant une plage de températures de part et d'autre du point de consigne et est agencé de sorte que lorsque la température d'aller est dans la bande proportionnelle, la vanne est réglée proportionnellement à la différence entre la température d'aller et le point de consigne ; de préférence
dans lequel la bande proportionnelle est calculée sur la base de la quantité attendue d'augmentation ou de diminution de la température par rapport au point de consigne si la vanne est ouverte ou fermée avec un temps de mouvement maximal fixé ; et en outre de préférence
dans lequel le temps de mouvement maximal correspond au temps de cycle de régulation.

5. Système selon la revendication 3 ou 4, dans lequel le calcul de la bande neutre et/ou de la bande proportionnelle est basé sur une hypothèse d'un débit à travers le circuit principal comparé au débit possible maximal à travers la sortie de circuit d'eau de dispositif de chauffage.

6. Système selon la revendication 5, dans lequel le système de commande est agencé pour commander le raccordement en utilisant une ou plusieurs des règles suivantes :
règle 1 : s'il y a une augmentation rapide de la température de retour, alors un système de prévention d'inversement de flux est déclenché ;
règle 2 : si la température d'aller croise la bande neutre dans un temps fixé, alors le débit supposé est réduit ;
règle 3 : si la température d'aller mesurée par le second capteur chute rapidement, alors le débit supposé est augmenté ;
règle 4 : si la température d'aller reste à l'extérieur de la bande neutre pendant un temps fixé, alors le flux relatif supposé est réglé à une valeur plus élevée ; et
règle 5 : si la température d'aller reste dans la moitié extérieure de la bande neutre pendant un temps fixé, alors le flux relatif supposé est augmenté ; de préférence
dans lequel le système de commande est agencé pour utiliser la règle 1 et le système de commande est agencé pour mettre en oeuvre le système de prévention d'inversement de flux par : fermeture de la vanne continuellement pendant un temps fixé, et ensuite continuation de fermeture de la vanne à une vitesse moindre jusqu'à ce que l'augmentation de température ait stoppé et/ou se soit inversée ; verrouillage des valeurs du point de consigne opérationnel, de la bande neutre et de la bande proportionnelle ; et réduction du débit supposé ; et en outre de préférence
dans lequel le système de commande est agencé pour libérer les variables verrouillées quand l'augmentation rapide de température a stoppé et/ou s'est inversée et qu'un fonctionnement normal a continué pendant une période fixée.

7. Système selon l'une quelconque des revendications 1 à 6, dans lequel il y a une source de chaleur secondaire (2) sur le circuit principal d'eau, et la fermeture complète de la vanne déclenche l'activation de la source de chaleur secondaire ; et/ou
dans lequel le circuit d'eau de dispositif de chauffage inclut un moyen de stockage de chaleur (3), et quand la vanne est complètement fermée ou partiellement fermée, l'eau provenant du dispositif de chauffage est utilisée pour remplir le moyen de stockage de chaleur.

8. Procédé de commande d'une vanne (8) pour commander le flux d'eau provenant d'une sortie (6) de circuit d'eau de dispositif de chauffage (4) à destination d'un circuit principal d'eau (5), le procédé comprenant :
la mesure (9) d'une température de retour au niveau d'un emplacement en amont de la sortie de circuit d'eau de dispositif de chauffage et dans un chemin de flux s'étendant entre cette sortie et un dispositif de chauffage (1) pour chauffer l'eau, dans le circuit d'eau de dispositif de chauffage ;
la mesure (10) d'une température d'aller du circuit principal d'eau au niveau d'un emplacement en aval de la sortie de circuit d'eau de dispositif de chauffage ; et
le réglage de la vanne quand les températures mesurées satisfont à certaines conditions.

9. Procédé selon la revendication 8, comprenant la détermination d'un point de consigne opérationnel sur la base de la température d'eau qui peut être fournie par le circuit d'eau de dispositif de chauffage, et la commande de la vanne pour régler la température de départ vers le point de consigne opérationnel.

10. Procédé selon la revendication 9, comprenant la mesure de la température d'aller à un intervalle fixé, correspondant à un temps de cycle de régulation, et le réglage de la vanne dans chaque cycle de régulation sur la base de l'écart entre la lecture de température d'aller et le point de consigne.

11. Procédé selon la revendication 10, dans lequel aucun réglage de vanne n'est réalisé quand la température de départ est dans une bande neutre, la bande neutre comprenant une plage de températures de part et d'autre du point de consigne ; de préférence
le procédé comprenant la détermination de la bande neutre sur la base de la quantité attendue d'augmentation ou de diminution de la température d'aller par rapport au point de consigne si la vanne est ouverte ou fermée avec un temps de mouvement minimal fixé.

12. Procédé selon la revendication 10 ou 11, dans lequel la vanne est réglée proportionnellement à la différence entre la température d'aller et le point de consigne quand la température de départ est dans une bande proportionnelle, la bande proportionnelle comprenant une plage de températures de part et d'autre du point de consigne ; de préférence
le procédé comprenant la détermination de la bande proportionnelle sur la base de la quantité attendue d'augmentation ou diminution de la température par rapport au point de consigne si la vanne est ouverte ou fermée avec un temps de mouvement maximal fixé ; et en outre de préférence
dans lequel le temps de mouvement maximal correspond au temps de cycle de régulation.

13. Procédé selon la revendication 11 ou 12, dans lequel le calcul de la bande neutre et/ou de la bande proportionnelle est basé sur une hypothèse d'un débit à travers le circuit principal comparé au débit possible maximal à travers la sortie de circuit d'eau de dispositif de chauffage.

14. Procédé selon la revendication 13, comprenant l'utilisation d'une ou plusieurs des règles suivantes :
règle 1 : s'il y a une augmentation rapide de la température de retour, alors un système de prévention d'inversement de flux est déclenché ;
règle 2 : si la température d'aller croise la bande neutre dans un temps fixé, alors le débit supposé est réduit ;
règle 3 : si la température d'aller mesurée par le second capteur chute rapidement, alors le débit supposé est augmenté ;
règle 4 : si la température d'aller reste à l'extérieur de la bande neutre pendant un temps fixé, alors le flux relatif supposé est réglé à une valeur plus élevée ; et
règle 5 : si la température d'aller reste dans la moitié extérieure de la bande neutre pendant un temps fixé, alors le flux relatif supposé est augmenté ; de préférence
dans lequel la règle 1 est utilisée et le système de prévention d'inversement de flux comprend : la fermeture de la vanne continuellement pendant un temps fixé et ensuite la continuation de fermeture de la vanne à une vitesse moindre jusqu'à ce que l'augmentation de température ait stoppé et/ou soit inversée ; le verrouillage des valeurs du point de consigne opérationnel, de la bande neutre et de la bande proportionnelle ; et la réduction du débit supposé ; et en outre de préférence
le procédé comprenant la libération des variables verrouillées quand l'augmentation rapide de température a stoppé et/ou s'est inversée et qu'un fonctionnement normal a continué pendant une période fixée.

15. Procédé selon l'une quelconque des revendications 8 à 14, dans lequel il y a une source de chaleur secondaire (2) sur le circuit principal d'eau, et la fermeture complète de la vanne déclenche l'activation de la source de chaleur secondaire ; et/ou
dans lequel le circuit d'eau de dispositif de chauffage inclut un moyen de stockage de chaleur (3), et quand la vanne est complètement fermée ou partiellement fermée, l'eau provenant du dispositif de chauffage est utilisée pour remplir le moyen de stockage de chaleur.
